# EUROPÄISCHE PATENTSCHRIFT

(11) **EP 3 745 838 B1**
(45) Veröffentlichungstag und Bekanntmachung des Hinweises auf die Patenterteilung: **14.02.2024**
(21) Anmeldenummer: 19701077.0
(22) Anmeldetag: 17.01.2019
(51) Int. Cl.: A01C 7/08, B07B 7/00

(54) **ABSCHEIDEEINRICHTUNG**
SEPARATING DEVICE
DISPOSITIF DE SÉPARATION

(30) Priorität: 30.01.2018 DE 102018101982
(43) Veröffentlichungstag der Anmeldung: 09.12.2020
(73) Patentinhaber: Amazonen-Werke H. Dreyer SE & Co. KG, 49205 Hasbergen (DE)
(72) Erfinder: WIEN, Thomas, 28816 Stuhr (DE); FLUCKE, Jan, 27798 Hude (DE)
(86) Internationale Anmeldenummer: PCT/EP2019/051118
(87) Internationale Veröffentlichungsnummer: WO 2019/149533

(56) Entgegenhaltungen:
- EP-A1- 1 138 186
- WO-A1-2013/180619
- AU-B2- 2010 200 082

## Beschreibung

Die Erfindung betrifft eine Dosiereinrichtung mit Abscheideeinrichtung zum Abscheiden von körnigem Material aus einer mit dem körnigen Material beladenen Luftströmung nach dem Oberbegriff des Patentanspruchs 1 und ein landwirtschaftliches Gerät zum Verteilen von körnigem Material auf einer landwirtschaftlichen Nutzfläche nach dem Oberbegriff des Patentanspruchs 15.

Bei landwirtschaftlichen Geräten zum Verteilen von körnigem Material, wie etwa bei Sämaschinen, werden üblicherweise mehrere mit körnigem Material beladene Luftströmungen erzeugt, um das körnige Material zu Vereinzelungseinrichtungen zu transportieren. Die Vereinzelungseinrichtungen sorgen für eine Vereinzelung der Körner des körnigen Materials, damit die vereinzelten Körner anschließend von Säscharen auf eine landwirtschaftliche Nutzfläche abgelegt werden können.

Vor den jeweiligen Vereinzelungseinrichtungen eines entsprechenden landwirtschaftlichen Geräts ist jeweils eine Abscheideeinrichtung zum Abscheiden des körnigen Materials aus der Luftströmung angeordnet. Entsprechende Abscheideeinrichtungen weisen üblicherweise einen Füllbereich für das sich innerhalb der Abscheideeinrichtung sammelnde Material auf.

Abscheideeinrichtungen sind beispielsweise aus der EP 1 138 186 A1 oder der AU 2010 200 082 B2 bekannt.

Aus der Druckschrift EP 2 855 036 B1 ist beispielsweise eine Dosiereinrichtung mit Abscheideeinrichtung bekannt, deren Füllbereich im Wesentlichen zylinderförmig ausgebildet ist. Der Füllbereich wird von einer Bewandung umgeben, welche mehrere Luftdurchlässe aufweist. Wenn der Füllbereich seinen maximalen Füllstand erreicht hat, werden die Luftauslassöffnungen durch das innerhalb des Füllbereichs befindliche körnige Material im Wesentlichen verschlossen. Da der Luftanteil der mit dem körnigen Material beladenen Luftströmung in diesem Fall nicht abgeführt werden kann, kommt die Förderung von weiterem körnigen Material in Richtung der Abscheideeinrichtung zum Erliegen. Durch das Abführen von körnigem Material aus dem Füllbereich der Abscheideeinrichtung in Richtung der Vereinzelungseinrichtung kommt es zu einer Füllstandsabsenkung in der Abscheideeinrichtung, woraus eine erneute Freigabe der Luftauslassöffnungen der Abscheideeinrichtung resultiert. Aufgrund der Freigabe der Luftauslassöffnungen kann der Luftanteil der mit körnigem Material beladenen Luftströmung wieder abgeführt werden, sodass die Förderung von körnigem Material wieder fortgesetzt wird.

Es hat sich gezeigt, dass die Luftauslassöffnungen bekannter Abscheideeinrichtungen infolge einer Füllstandsabsenkung im Füllbereich nicht ausreichend schnell freigegeben werden, um eine ausreichend rasche Wiederaufnahme der Förderung des körnigen Materials in Richtung der Abscheideeinrichtung zu gewährleisten.

Die der Erfindung zugrundeliegende Aufgabe besteht somit darin, die Bereitstellung von körnigem Material durch eine mit körnigem Material beladene Luftströmung für Vereinzelungseinrichtungen von landwirtschaftlichen Geräten zum Verteilen des körnigen Materials zu verbessern.

Die Aufgabe wird durch die kennzeichnenden Merkmale des Anspruchs 1 gelöst.

Die Erfindung macht sich die Erkenntnis zunutze, dass die Freigabe der Luftauslassöffnungen bei sinkendem Füllstand über die Form des Füllbereichs veränderbar ist. Dadurch, dass der Füllbereich unterschiedliche Querschnitte aufweist, kann eine vergleichsweise rasche Füllstandsabsenkung bei einer vergleichsweise geringen Materialentnahme erreicht werden, sodass die Freigabe der Luftauslassöffnungen im Vergleich zu Abscheideeinrichtungen mit zylindrischen Füllbereichen bei gleicher Materialentnahme erheblich beschleunigt werden kann.

Die Querschnitte des Füllbereichs können sich beispielsweise in ihrer Größe und/oder Form unterscheiden. Vorzugsweise weist der Füllbereich eine Mittelachse auf, wobei die sich unterscheidenden Querschnitte in Ebenen liegen, welche orthogonal zu der Mittelachse ausgerichtet sind. Die Einlassöffnung für die mit körnigem Material beladene Luftströmung und/oder die Materialauslassöffnung weisen vorzugsweise unterschiedliche Querschnitte auf, wobei auch diese Querschnitte sich in ihrer Größe und/oder ihrer Form unterscheiden können. Die Einlassöffnung für die mit körnigem Material beladene Luftströmung und/oder die Materialauslassöffnung weisen vorzugsweise einen runden Querschnitt auf. Die Abscheideeinrichtung kann ein korbförmiges Element sein. Durch die Ausgestaltung des Füllbereichs wird außerdem eine gleichmäßigere Förderung des körnigen Materials umgesetzt.

In einer besonders bevorzugten Ausführungsform der erfindungsgemäßen Dosiereinrichtung verringert sich die Fläche des Querschnitts des Füllbereichs von der Einlassöffnung zur Materialauslassöffnung zumindest abschnittsweise. Die Fläche des Querschnitts des Füllbereichs kann sich von der Einlassöffnung zur Materialauslassöffnung zumindest abschnittsweise stetig oder kontinuierlich verringern. Die Fläche des Querschnitts des Füllbereichs kann sich von der Einlassöffnung zur Materialauslassöffnung zumindest abschnittsweise schrittweise verringern. Alternativ oder zusätzlich kann der Füllbereich zumindest abschnittsweise Querschnittssprünge aufweisen. Außerdem kann sich die Form des Querschnitts des Füllbereichs von der Einlassöffnung zur Materialauslassöffnung zumindest abschnittsweise verändern.

In einer weiteren bevorzugten Ausführungsform der erfindungsgemäßen Dosiereinrichtung ist der Füllbereich zumindest abschnittsweise trichterförmig ausgebildet. Durch die Trichterform wird eine schnelle Füllstandsabsenkung erreicht, wodurch die eine oder die mehreren Luftauslassöffnungen äußerst rasch freigegeben werden. Die Einlassöffnung und die Materialauslassöffnung sind vorzugsweise gegenüberliegend angeordnet. Der trichterförmige Füllbereich kann im Wesentlichen ovale, im Wesentlichen runde und/oder im Wesentlichen mehreckige Querschnitte aufweisen.

In einer Weiterbildung der erfindungsgemäßen Dosiereinrichtung ist der eine oder sind die mehreren Luftauslassöffnungen innerhalb einer den Füllbereich begrenzenden und vorzugsweise umlaufenden Bewandung angeordnet. Die Bewandung kann dabei beispielsweise einstückig ausgebildet sein, wobei die eine oder die mehreren Luftauslassöffnungen als Ausnehmungen in der Bewandung ausgebildet sind. Ferner kann die Bewandung mehrteilig ausgebildet sein, beispielsweise durch eine Vielzahl von nebeneinander angeordneten Stabelementen und/oder einer Vielzahl von übereinander angeordneten Ringelementen.

In einer anderen Ausführungsform der erfindungsgemäßen Dosiereinrichtung sind die mehreren Luftauslassöffnungen gleichmäßig über den Umfang der den Füllbereich begrenzenden Bewandung angeordnet. Durch die gleichmäßige Anordnung der Luftauslassöffnungen wird eine gleichmäßige Luftführung aus dem Füllbereich heraus umgesetzt, wodurch Luftverwirbelungen in der Umgebung der Abscheideeinrichtung vermieden werden. Derartige Luftverwirbelungen können die Zuführung des körnigen Materials zu der Vereinzelungseinrichtung beeinträchtigen.

In einer anderen Ausführungsform der erfindungsgemäßen Dosiereinrichtung ist die eine oder sind die mehreren Luftauslassöffnungen schlitzförmig oder als Schlitzöffnungen ausgebildet. Die Schlitzbreite ist dabei derart zu bemessen, dass das körnige Material innerhalb des Füllbereichs der Abscheideeinrichtung die eine oder die mehreren Luftauslassöffnungen nicht passieren kann. Somit wird sichergestellt, dass sämtliches Material in dem Füllbereich der Abscheideeinrichtung über die Materialauslassöffnung in Richtung der Vereinzelungseinrichtung abgegeben wird. Die schlitzförmige Ausgestaltung der einen oder der mehreren Luftauslassöffnungen erlaubt die Umsetzung eines vergleichsweise großen Anteils an Öffnungsfläche innerhalb der Bewandung des Füllbereichs.

Darüber hinaus ist eine erfindungsgemäße Dosiereinrichtung bevorzugt, bei welcher oberhalb der Luftauslassöffnungen ein umlaufender Materialring angeordnet ist, wobei der oberhalb der Luftauslassöffnungen umlaufende Materialring vorzugsweise die Einlassöffnung ausbildet. Durch den oberhalb der Luftauslassöffnungen umlaufenden Materialring wird die Steifigkeit und Festigkeit der Abscheideeinrichtung erheblich gesteigert, sodass die Abscheideeinrichtung einerseits robust gegen externe Beanspruchung und andererseits unempfindlich gegen Druckstöße ist.

In einer Weiterbildung der erfindungsgemäßen Dosiereinrichtung weist diese einen sich von der den Füllbereich begrenzenden Bewandung nach außen erstreckenden und vorzugsweise umlaufenden und/oder ringförmigen Steg auf. Über den sich nach außen erstreckenden ringförmigen Steg kann die Abscheideeinrichtung in eine Aufnahmekammer einer Dosiereinrichtung eingesetzt und in dieser stabil positioniert werden. Darüber hinaus führt der sich nach außen erstreckende Steg zu einer erheblichen Versteifung der Abscheideeinrichtung, wodurch das Beschädigungsrisiko durch Stoßbeanspruchung weiter reduziert wird. Der Steg kann eine im Wesentlichen runde, rechteckige oder quadratische Außenkontur aufweisen.

In einer anderen Ausführungsform der erfindungsgemäßen Dosiereinrichtung ist unterhalb der Luftauslassöffnungen ein umlaufender Materialring angeordnet, wobei der unterhalb der Luftauslassöffnungen umlaufende Materialring vorzugsweise oberhalb des sich nach außen erstreckenden Stegs angeordnet ist. Durch den unterhalb der Luftauslassöffnungen umlaufenden Materialring wird die Steifigkeit und Festigkeit der Abscheideeinrichtung erheblich gesteigert, sodass die Abscheideeinrichtung einerseits robust gegen externe Beanspruchung und andererseits unempfindlich gegen Druckstöße ist.

Außerdem ist eine erfindungsgemäße Dosiereinrichtung vorteilhaft, bei welcher zwischen einer ersten Gruppe von Luftauslassöffnungen und einer zweiten Gruppe von Luftauslassöffnungen ein umlaufender Materialring angeordnet ist. Durch den zwischen der ersten Gruppe von Luftauslassöffnungen und der zweiten Gruppen von Luftauslassöffnungen angeordneten umlaufenden Materialring wird die Steifigkeit und Festigkeit der Abscheideeinrichtung erheblich gesteigert, sodass die Abscheideeinrichtung einerseits robust gegen externe Beanspruchung und andererseits unempfindlich gegen Druckstöße ist.

Vorzugsweise sind der unterhalb der Luftauslassöffnungen umlaufende Materialring, der oberhalb der Luftauslassöffnungen umlaufende Materialring und/oder der zwischen der ersten Gruppe von Luftauslassöffnungen und der zweiten Gruppen von Luftauslassöffnungen angeordnete umlaufende Materialring koaxial und/oder in parallel zueinander ausgerichteten Ebenen angeordnet.

Ferner ist eine erfindungsgemäße Dosiereinrichtung bevorzugt, welche aus einem einstückigen Grundkörper, insbesondere aus Kunststoff, ausgebildet ist. Vorzugsweise ist die Abscheideeinrichtung ein Kunststoffspritzgusskörper. Durch die Ausbildung aus Kunststoff kann die Abscheideeinrichtung vergleichsweise kostengünstig hergestellt werden. Außerdem erlaubt die Ausbildung aus Kunststoff die Umsetzung einer vergleichsweise komplexen Formgebung, ohne dass hierdurch die Fertigungskosten wesentlich gesteigert werden.

Die Vereinzelungseinrichtung kann beispielsweise elektromotorisch angetrieben sein. Ferner kann die Vereinzelungseinrichtung eine Vereinzelungstrommel oder eine Vereinzelungsscheibe umfassen, welche zum Vereinzeln der Körner des körnigen Materials rotatorisch angetrieben wird.

In der erfindungsgemäßen Dosiereinrichtung weist diese eine Aufnahmekammer auf, in welcher die Abscheideeinrichtung angeordnet ist. Ferner weist die Dosiereinrichtung einen Drucklufteinlass auf, über welchen der Dosiereinrichtung Druckluft zum Betrieb der Vereinzelungseinrichtung bereitstellbar ist. Ferner weist die Dosiereinrichtung einen Luftkanal auf, welcher den Drucklufteinlass mit der Vereinzelungseinrichtung verbindet. Die Luft aus der einen oder den mehreren Luftauslassöffnungen der Abscheideeinrichtung strömt vorzugsweise in die Aufnahmekammer. Zwischen der Bewandung der Aufnahmekammer und der Abscheideeinrichtung ist vorzugsweise eine Ringkammer ausgebildet.

In einer anderen Ausführungsform der erfindungsgemäßen Dosiereinrichtung ist die Aufnahmekammer über einen Verbindungskanal derart mit dem Luftkanal verbunden, dass das Druckniveau innerhalb der Aufnahmekammer das Druckniveau innerhalb des Luftkanals beeinflusst. In dem Luftkanal kann in dem Bereich der Einmündung des Verbindungskanals ein Düsenelement angeordnet sein. Vorzugsweise wird durch das Düsenelement ein Unterdruck in der Aufnahmekammer erzeugt, durch welchen die Materialförderung aufrechterhalten wird.

In einer Weiterbildung der erfindungsgemäßen Dosiereinrichtung weist der Luftkanal eine Bypass-Leitung auf, welche dazu eingerichtet ist, die Druckluft an dem Verbindungskanal vorbeizuleiten. Die Druckluftströmung durch die Bypass-Leitung kann beispielsweise mittels einer Verstelleinrichtung einstellbar sein. Insbesondere kann die Verstelleinrichtung dazu eingerichtet sein, die Bypass-Leitung teilweise oder vollständig zu sperren und/oder teilweise oder vollständig freizugeben.

Die der Erfindung zugrundeliegende Aufgabe wird ferner durch ein landwirtschaftliches Gerät der eingangs genannten Art gelöst, wobei die Dosiereinrichtungen des erfindungsgemäßen landwirtschaftlichen Geräts nach einer der vorstehend beschriebenen Ausführungsformen ausgebildet sind. Hinsichtlich der Vorteile und Modifikationen des erfindungsgemäßen landwirtschaftlichen Geräts wird auf die Vorteile und Modifikationen der erfindungsgemäßen Dosiereinrichtung verwiesen.

Weitere Einzelheiten der Erfindung sind der Figurenbeschreibung und den Zeichnungen zu entnehmen. Es zeigen
- Fig. 1: ein Ausführungsbeispiel der erfindungsgemäßen Abscheideeinrichtung in einer perspektivischen Darstellung;
- Fig. 2: die in der Fig. 1 dargestellte Abscheideeinrichtung in einer Schnittdarstellung;
- Fig. 3: ein Ausführungsbeispiel der erfindungsgemäßen Dosiereinrichtung in einer perspektivischen Darstellung;
- Fig. 4: die in der Fig. 3 dargestellte Dosiereinrichtung in einer Schnittdarstellung;
- Fig. 5: die in der Fig. 3 dargestellte Dosiereinrichtung in einer weiteren Schnittdarstellung; und
- Fig. 6: die in der Fig. 3 dargestellte Dosiereinrichtung in einer weiteren Schnittdarstellung.

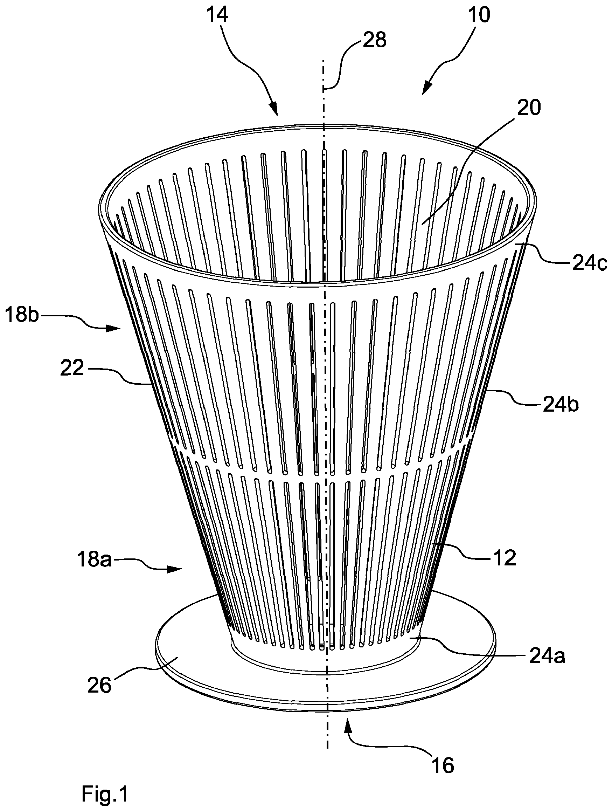

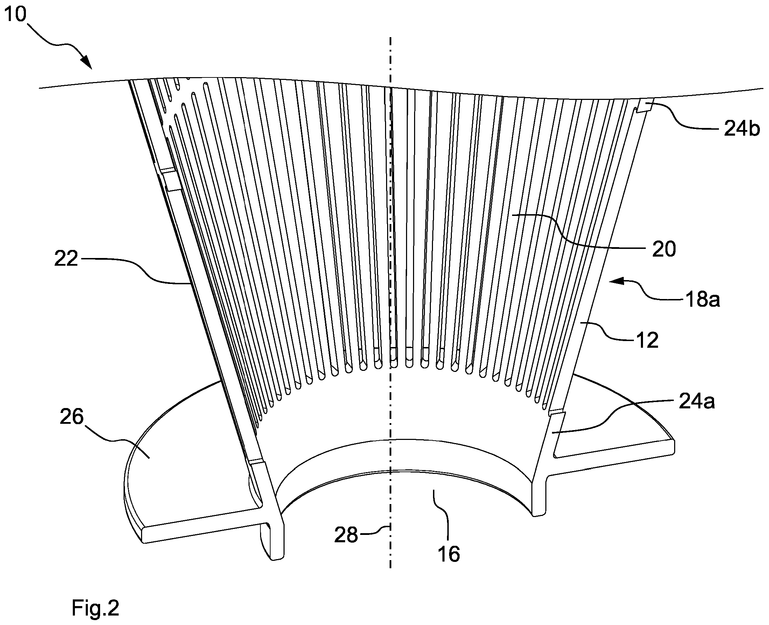

Die Fig. 1 und die Fig. 2 zeigen eine Abscheideeinrichtung 10 zum Abscheiden von körnigem Material aus einer mit dem körnigen Material beladenen Luftströmung.

Die Abscheideeinrichtung 10 ist aus einem einstückigen Grundkörper 12 aus Kunststoff ausgebildet und weist eine Einlassöffnung 14, eine Materialauslassöffnung 16 und mehrere Luftauslassöffnungen 18a, 18b auf.

Über die Einlassöffnung 14 kann die mit körnigem Material beladene Luftströmung in einen Füllbereich 20 der Abscheideeinrichtung 10 einströmen. In dem Füllbereich 20 kann sich körniges Material ansammeln, wobei sich der Füllbereich 20 entlang einer Mittelachse 28 und zwischen der Einlassöffnung 14 und der Materialauslassöffnung 16 erstreckt. Über die Materialauslassöffnung 16 kann das aus der beladenen Luftströmung abgeschiedene Material die Abscheideeinrichtung 10 verlassen.

Durch die Luftauslassöffnungen 18a, 18b kann die durch das Abscheiden entstehende unbeladene Luftströmung die Abscheideeinrichtung 10 verlassen. Die Luftauslassöffnungen 18a, 18b sind als schlitzförmige Ausnehmungen innerhalb einer den Füllbereich 20 begrenzenden und umlaufenden Bewandung 22 ausgebildet, wobei die Luftauslassöffnungen 18a, 18b eine erste untere Gruppe von Luftauslassöffnungen 18a und eine zweite obere Gruppe von Luftauslassöffnungen 18b umfassen. Die Luftauslassöffnungen 18a, 18b der jeweiligen Gruppen sind gleichmäßig über den Umfang der den Füllbereich 20 begrenzenden Bewandung 22 angeordnet.

Der Füllbereich 20 ist trichterförmig ausgebildet, wobei die Einlassöffnung 14 und die Materialauslassöffnung 16 gegenüberliegend angeordnet sind. Die Abscheideeinrichtung 10 ist somit als korbförmiges Element ausgebildet. Aufgrund der Trichterform verringert sich die Fläche des Querschnitts des Füllbereichs 20 kontinuierlich von der Einlassöffnung 14 zur Materialauslassöffnung 16. Mithin weist der Füllbereich 20 unterschiedliche Querschnitte auf, wobei sämtliche Querschnitte im Wesentlichen kreisförmig sind und sich in der Größe der Querschnittsfläche unterscheiden. Die Einlassöffnung 14 und die Materialauslassöffnung 16 weisen unterschiedliche Durchmesser auf.

Ferner weist der Grundkörper 12 der Abscheideeinrichtung 10 drei Materialringe 24a-24c auf, wobei die Materialringe 24a-24c koaxial zueinander angeordnet sind und in parallel zueinander ausgerichteten Ebenen liegen.

Ein umlaufender Materialring 24a ist unterhalb der Luftauslassöffnungen 18a, 18b angeordnet. Ein weiterer umlaufender Materialring 24c ist oberhalb der Luftauslassöffnungen 18a, 18b angeordnet, wobei der oberhalb der Luftauslassöffnungen 18a, 18b umlaufende Materialring 24c die Einlassöffnung 14 ausgebildet. Ein weiterer umlaufender Materialring 24b ist zwischen der ersten Gruppe von Luftauslassöffnungen 18a und der zweiten Gruppe von Luftauslassöffnungen 18b angeordnet.

Außerdem weist die Abscheideeinrichtung 10 einen sich von der den Füllbereich 20 begrenzenden Bewandung 22 nach außen erstreckenden und umlaufenden ringförmigen Steg 26 auf. Der unterhalb der Luftauslassöffnungen 18a, 18b umlaufende Materialring 24a ist oberhalb des sich nach außen erstreckenden Stegs 26 angeordnet.

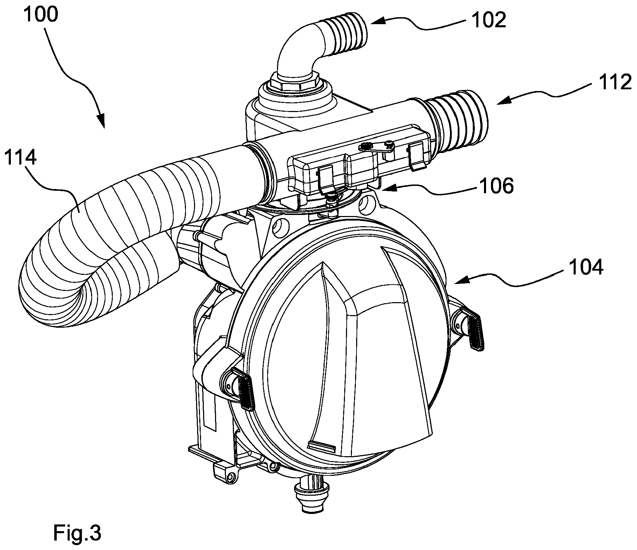

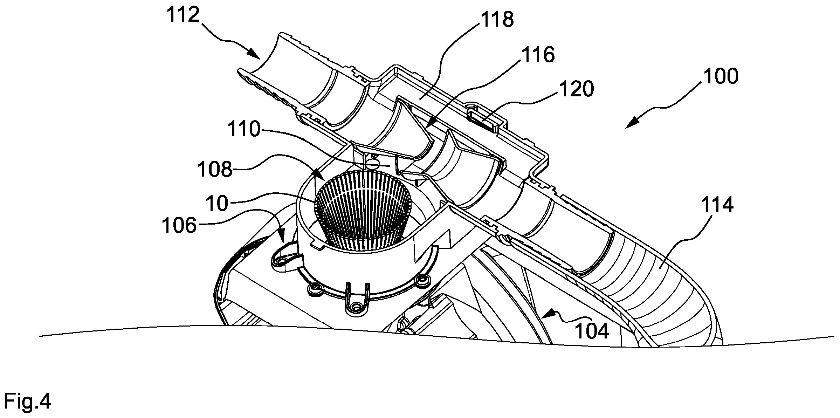

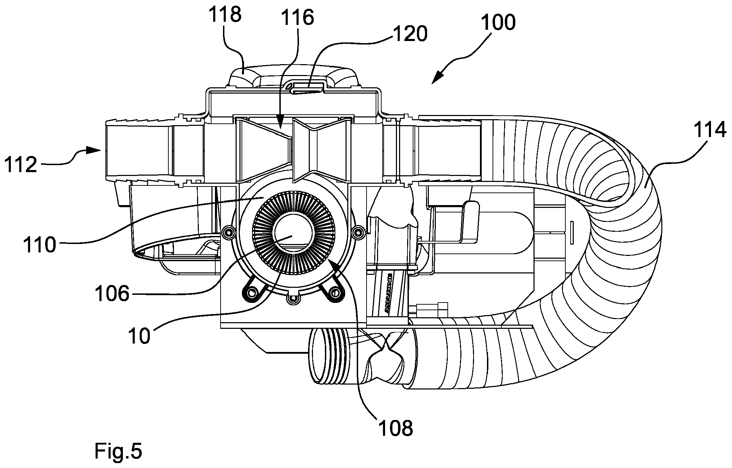

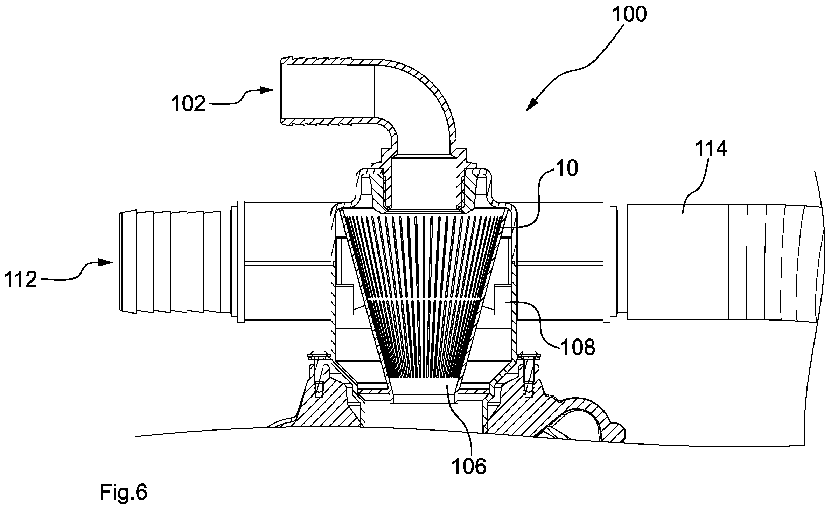

Die Fig. 3 bis 6 zeigen eine Dosiereinrichtung 100 zum Dosieren von körnigem Material. Die Dosiereinrichtung 100 umfasst einen Einspeiseeinlass 102, über welchen eine mit dem körnigen Material beladene Luftströmung in die Dosiereinrichtung 100 einleitbar ist. Der Einspeiseeinlass 102 ist mit einer Aufnahmekammer 108 verbunden, in welcher eine Abscheideeinrichtung 10 angeordnet ist. Die Abscheideeinrichtung 10 kann beispielweise gemäß der in der Fig. 1 und der Fig. 2 dargestellten Abscheideeinrichtung 10 ausgebildet sein. Die mit körnigem Material beladene Luftströmung wird über die Einlassöffnung 14 in die Abscheideeinrichtung 10 eingeleitet. Mittels der Abscheideeinrichtung 10 wird das körnige Material dann aus der beladenen Luftströmung abgeschieden. Das abgeschiedene körnige Material wird dann über eine Zuführleitung 106, welche mit der Materialauslassöffnung 16 der Abscheideeinrichtung 10 verbunden ist, einer Vereinzelungseinrichtung 104 zugeführt. Die Vereinzelungseinrichtung 104 ist dazu eingerichtet, Körner aus dem körnigen Material zu vereinzeln und einem Säschar in einer Einzelkornströmung bereitzustellen.

Außerdem weist die Dosiereinrichtung 100 einen Drucklufteinlass 112 und einen Luftkanal 114 auf. Über den Drucklufteinlass 112 wird der Dosiereinrichtung 100 Druckluft zum Betrieb der Vereinzelungseinrichtung 104 bereitgestellt. Der Luftkanal 114 verbindet den Drucklufteinlass 112 mit der Vereinzelungseinrichtung 104.

Die Aufnahmekammer 108, in welcher die Abscheideeinrichtung 10 angeordnet ist, ist über einen Verbindungskanal 110 mit dem Luftkanal 114 verbunden. In dem Luftkanal 114 ist in dem Bereich der Einmündung des Verbindungskanals 110 ein Düsenelement 116 angeordnet, durch welches innerhalb der Aufnahmekammer 108 ein Unterdruck erzeugt wird. Der Luftkanal 114 weist ferner eine Bypass-Leitung 118 auf, mittels welcher die Druckluft an dem Verbindungkanal vorbeigeleitet werden kann. Die Druckluftströmung durch die Bypass-Leitung 118 kann dabei mittels einer Verstelleinrichtung 120 eingestellt werden.

Die dargestellte Dosiereinrichtung 100 kann beispielsweise in einem landwirtschaftlichen Gerät zum Verteilen von körnigem Material auf einer landwirtschaftlichen Nutzfläche, etwa einer Sämaschine, zum Einsatz kommen. Ein derartiges landwirtschaftliches Gerät weist dabei üblicherweise einen zentralen Vorratsbehälter zum Bevorraten des körnigen Materials auf, wobei das körnige Material aus dem zentralen Vorratsbehälter jeweils über eine mit dem körnigen Material beladene Luftströmung mehreren Dosiereinheiten 100 zugeleitet wird. Die Dosiereinheiten 100 erzeugen jeweils eine Einzelkornströmung, welche einem Säschar zum Ablegen der vereinzelten Körner auf der landwirtschaftlichen Nutzfläche zugeleitet wird.

### Bezugszeichenliste

- 10: Abscheideeinrichtung
- 12: Grundkörper
- 14: Einlassöffnung
- 16: Materialauslassöffnung
- 18a, 18b: Luftauslassöffnungen
- 20: Füllbereich
- 22: Bewandung
- 24a-24c: Materialringe
- 26: Steg
- 28: Mittelachse

- 100: Dosiereinrichtung
- 102: Einspeiseeinlass
- 104: Vereinzelungseinrichtung
- 106: Zuführleitung
- 108: Aufnahmekammer
- 110: Verbindungskanal
- 112: Drucklufteinlass
- 114: Luftkanal
- 116: Düsenelement
- 118: Bypass-Leitung
- 120: Verstelleinrichtung

## Patentansprüche

1. Dosiereinrichtung (100) zum Dosieren von körnigem Material, mit
- einem Einspeiseeinlass (102) für eine mit dem körnigen Material beladene Luftströmung;
- einer Abscheideeinrichtung (10) zum Abscheiden von körnigem Material aus der beladenen Luftströmung, wobei eine Einlassöffnung (14) der Abscheideeinrichtung (10) mit dem Einspeiseeinlass (102) verbunden ist; und
- einer Vereinzelungseinrichtung (104), welche über eine Zuführleitung (106) mit einer Materialauslassöffnung (16) der Abscheideeinrichtung (10) verbunden und dazu eingerichtet ist, Körner aus dem körnigen Material zu vereinzeln und in einer Einzelkornströmung bereitzustellen;
wobei die Abscheideeinrichtung (10) aufweist:
- eine Einlassöffnung (14) für die beladene Luftströmung;
- eine Materialauslassöffnung (16) für das aus der beladenen Luftströmung abgeschiedene Material;
- eine oder mehrere Luftauslassöffnungen (18a, 18b) für die durch das Abscheiden entstehende unbeladene Luftströmung; und
- einen Füllbereich (20) für sich innerhalb der Abscheideeinrichtung (10) sammelndes Material, wobei sich der Füllbereich (20) zwischen der Einlassöffnung (14) und der Materialauslassöffnung (16) erstreckt,
die Dosiereinrichtung (100) ferner umfasst:
- eine Aufnahmekammer (108), in welcher die Abscheideeinrichtung (10) angeordnet ist;
- einen Drucklufteinlass (112), über welchen der Dosiereinrichtung (100) Druckluft zum Betrieb der Vereinzelungseinrichtung (104) bereitstellbar ist; und
- einen Luftkanal (114), welcher den Drucklufteinlass (112) mit der Vereinzelungseinrichtung (104) verbindet, **dadurch gekennzeichnet, dass** der Füllbereich (20) unterschiedliche Querschnitte aufweist.

2. Dosiereinrichtung (100) nach Anspruch 1,
**dadurch gekennzeichnet, dass** die Aufnahmekammer (108) über einen Verbindungskanal (110) derart mit dem Luftkanal (114) verbunden ist, dass das Druckniveau innerhalb der Aufnahmekammer (108) das Druckniveau innerhalb des Luftkanals (114) beeinflusst.

3. Dosiereinrichtung (100) nach Anspruch 2,
**dadurch gekennzeichnet, dass** dem Luftkanal 114 in dem Bereich der Einmündung des Verbindungskanals 110 ein Düsenelement 116 angeordnet ist.

4. Dosiereinrichtung (100) nach Anspruch 2,
**dadurch gekennzeichnet, dass** der Luftkanal (114) eine Bypass-Leitung (118) aufweist, welche dazu eingerichtet ist, die Druckluft an dem Verbindungkanal vorbeizuleiten.

5. Dosiereinrichtung (100) nach Anspruch 4,
**dadurch gekennzeichnet, dass** in der Bypass-Leitung (118) eine Verstelleinrichtung (120) angeordnet ist zur Verstellung der Druckluftströmung durch die Bypass-Leitung (118).

6. Dosiereinrichtung (100) nach einem der vorstehenden Ansprüche,
**dadurch gekennzeichnet, dass** sich die Fläche des Querschnitts des Füllbereichs (20) von der Einlassöffnung (14) zur Materialauslassöffnung (16) zumindest abschnittsweise verringert,
und/oder
der Füllbereich (20) vorzugsweise zumindest abschnittsweise trichterförmig ausgebildet ist.

7. Dosiereinrichtung (100) nach einem der vorstehenden Ansprüche,
**dadurch gekennzeichnet, dass** der eine oder die mehreren Luftauslassöffnungen (18a, 18b) innerhalb einer den Füllbereich (20) begrenzenden und vorzugsweise umlaufenden Bewandung (22) angeordnet sind.

8. Dosiereinrichtung (100) nach Anspruch 7,
**dadurch gekennzeichnet, dass** mehrere Luftauslassöffnungen (18a, 18b) gleichmäßig über den Umfang der den Füllbereich (20) begrenzenden Bewandung (22) angeordnet sind.

9. Dosiereinrichtung (100) nach einem der vorstehenden Ansprüche,
**dadurch gekennzeichnet, dass** die eine oder die mehreren Luftauslassöffnungen (18a, 18b) schlitzförmig oder als Schlitzöffnungen ausgebildet sind.

10. Dosiereinrichtung (100) nach einem der vorstehenden Ansprüche,
**dadurch gekennzeichnet, dass** oberhalb der Luftauslassöffnungen (18a, 18b) ein umlaufender Materialring (24c) angeordnet ist, wobei der oberhalb der Luftauslassöffnungen (18a, 18b) umlaufende Materialring (24c) vorzugsweise die Einlassöffnung (14) ausgebildet.

11. Dosiereinrichtung (100) nach einem der vorstehenden Ansprüche, **gekennzeichnet durch** einen sich von der den Füllbereich (20) begrenzenden Bewandung (22) nach außen erstreckenden und vorzugsweise umlaufenden und/oder ringförmigen Steg (26).

12. Dosiereinrichtung (100) nach einem der vorstehenden Ansprüche,
**dadurch gekennzeichnet, dass** unterhalb der Luftauslassöffnungen (18a, 18b) ein umlaufender Materialring (24a) angeordnet ist, wobei der unterhalb der Luftauslassöffnungen (18a, 18b) umlaufende Materialring (24a) vorzugsweise oberhalb des sich nach außen erstreckenden Stegs (26) angeordnet ist.

13. Dosiereinrichtung (100) nach einem der vorstehenden Ansprüche,
**dadurch gekennzeichnet, dass** zwischen einer ersten Gruppe von Luftauslassöffnungen (18a) und einer zweiten Gruppe von Luftauslassöffnungen (18b) ein umlaufender Materialring (24b) angeordnet ist.

14. Dosiereinrichtung (100) nach einem der vorstehenden Ansprüche,
**dadurch gekennzeichnet, dass** die Abscheideeinrichtung (10) aus einem einstückigen Grundkörper (12), insbesondere aus Kunststoff, ausgebildet ist.

15. Landwirtschaftliches Gerät zum Verteilen von körnigem Material auf einer landwirtschaftlichen Nutzfläche, mit
- einem zentralen Vorratsbehälter zum Bevorraten des körnigen Materials,
- mehreren Dosiereinrichtungen (100), welchen das körnige Material aus dem zentralen Vorratsbehälter jeweils über eine mit dem körnigen Material beladene Luftströmung zuleitbar ist; und
- mehreren Säscharen zum Ablegen von vereinzelten Körnern auf der landwirtschaftlichen Nutzfläche,
wobei jede Dosiereinrichtung (100) dazu eingerichtet ist, zumindest einem Säschar Körner aus dem körnigen Material in einer Einzelkornströmung bereitzustellen;
**dadurch gekennzeichnet, dass** die Dosiereinrichtungen (100) nach einem der Ansprüche 1 bis 14 ausgebildet sind.

## Claims

1. Metering device (100) for metering granular material, comprising
- a feed inlet (102) for an air flow laden with the granular material;
- a filtering device (10) for filtering granular material from the laden air flow, an inlet opening (14) of the filtering device (10) being connected to the feed inlet (102); and
- a separating device (104) which is connected via a supply line (106) to a material outlet opening (16) of the filtering device (10), and is designed to separate grains from the granular material and to provide said grains in a single-grain flow;
the filtering device (10) comprising:
- an inlet opening (14) for the laden air flow;
- a material outlet opening (16) for the material filtered from the laden air flow;
- one or more air outlet openings (18a, 18b) for the unladen air flow produced by the filtering; and
- a filling region (20) for material collecting within the filtering device (10), the filling region (20) extending between the inlet opening (14) and the material outlet opening (16),
the metering device (100) further comprising:
- a receiving chamber (108), in which the filtering device (10) is arranged;
- a compressed air inlet (112), via which compressed air can be provided to the metering device (100) in order to operate the separating device (104); and
- an air duct (114) which connects the compressed air inlet (112) to the separating device (104), **characterized in that** the filling region (20) has differing cross sections.

2. Metering device (100) according to claim 1,
**characterized in that** the receiving chamber (108) is connected to the air duct (114) via a connection duct (110) such that the pressure level within the receiving chamber (108) influences the pressure level within the air duct (114).

3. Metering device (100) according to claim 2,
**characterized in that** a nozzle element 116 is arranged in the air duct 114 in the region of the opening of the connection duct 110.

4. Metering device (100) according to claim 2,
**characterized in that** the air duct (114) has a bypass line (118) which is designed to guide the compressed air past the connection duct.

5. Metering device (100) according to claim 4,
**characterized in that** an adjusting device (120) is arranged in the bypass line (118) in order to adjust the compressed air flow through the bypass line (118).

6. Metering device (100) according to any of the preceding claims,
**characterized in that** the area of the cross section of the filling region (20) decreases from the inlet opening (14) to the material outlet opening (16), at least in portions,
and/or
the filling region (20) is preferably designed to be funnel-shaped at least in portions.

7. Metering device (100) according to any of the preceding claims,
**characterized in that** the one or more air outlet openings (18a, 18b) are arranged within a wall (22) which delimits the filling region (20) and is preferably circumferential.

8. Metering device (100) according to claim 7,
**characterized in that** a plurality of air outlet openings (18a, 18b) are arranged uniformly over the circumference of the wall (22) delimiting the filling region (20).

9. Metering device (100) according to any of the preceding claims,
**characterized in that** the one or more air outlet openings (18a, 18b) are slot-shaped or designed as slot openings.

10. Metering device (100) according to any of the preceding claims,
**characterized in that** a circumferential material ring (24c) is arranged above the air outlet openings (18a, 18b), the material ring (24c) which extends circumferentially above the air outlet openings (18a, 18b) preferably forming the inlet opening (14).

11. Metering device (100) according to any of the preceding claims,
**characterized by** a projection (26) which extends outward from the wall (22) delimiting the filling region (20) and is preferably circumferential and/or annular.

12. Metering device (100) according to any of the preceding claims,
**characterized in that** a circumferential material ring (24a) is arranged below the air outlet openings (18a, 18b), the material ring (24a) which extends circumferentially beneath the air outlet openings (18a, 18b) preferably being arranged above the outwardly extending projection (26).

13. Metering device (100) according to any of the preceding claims,
**characterized in that** a circumferential material ring (24b) is arranged between a first group of air outlet openings (18a) and a second group of air outlet openings (18b).

14. Metering device (100) according to any of the preceding claims,
**characterized in that** the filtering device (10) is formed from a single-piece main body (12), in particular made of plastics material.

15. Agricultural tool for distributing granular material on an agricultural area, comprising
- a central storage container for storing the granular material,
- a plurality of metering devices (100) which can be supplied with the granular material from the central storage container in each case by means of an air flow laden with the granular material; and
- a plurality of sowing coulters for depositing separated grains on the agricultural area,
each metering device (100) being designed to provide grains of the granular material in a single-grain flow to at least one sowing coulter;
**characterized in that** the metering device (100) is designed according to any of claims 1 to 14.

## Revendications

1. Dispositif de dosage (100) permettant de doser un matériau granulaire, comportant
- une entrée d'injection (102) pour un flux d'air chargé du matériau granulaire ;
- un dispositif de séparation (10) permettant de séparer le matériau granulaire du flux d'air chargé, une ouverture d'entrée (14) du dispositif de séparation (10) étant reliée à l'entrée d'injection (102) et
- un dispositif d'individualisation (104), qui est relié par l'intermédiaire d'une conduite d'alimentation (106) à une ouverture de sortie de matériau (16) du dispositif de séparation (10) et conçu pour individualiser les grains du matériau granulaire et les mettre à disposition dans un flux de grains individualisés ;
le dispositif de séparation (10) présentant :
- une ouverture d'entrée (14) pour le flux d'air chargé ;
- une ouverture de sortie de matériau (16) pour le matériau séparé du flux d'air chargé ;
- une ou plusieurs ouvertures de sortie d'air (18a, 18b) pour le flux d'air non chargé formé par la séparation ; et
- une zone de remplissage (20) pour le matériau s'accumulant dans le dispositif de séparation (10), la zone de remplissage (20) s'étendant entre l'ouverture d'entrée (14) et l'ouverture de sortie de matériau (16),
le dispositif de dosage (100) comprenant en outre :
- une chambre de réception (108), dans laquelle est disposé le dispositif de séparation (10) ;
- une entrée d'air comprimé (112), par l'intermédiaire de laquelle de l'air comprimé pour le fonctionnement du dispositif d'individualisation (104) peut être mis à disposition du dispositif de dosage (100) ; et
- un canal à air (114), qui relie l'entrée d'air comprimé (112) au dispositif d'individualisation (104), **caractérisé en ce que** la zone de remplissage (20) présente différentes sections transversales.

2. Dispositif de dosage (100) selon la revendication 1,
**caractérisé en ce que** la chambre de réception (108) est reliée par l'intermédiaire d'un canal de liaison (110) au canal à air (114) de manière telle que le niveau de pression dans la chambre de réception (108) influence le niveau de pression dans le canal à air (114).

3. Dispositif de dosage (100) selon la revendication 2,
**caractérisé en ce qu'**un élément de buse 116 est disposé dans le canal à air 114 dans la zone où débouche le canal de liaison 110.

4. Dispositif de dosage (100) selon la revendication 2,
**caractérisé en ce que** le canal à air (114) présente une conduite de dérivation (118) qui est conçue pour faire passer l'air comprimé au-delà du canal de liaison.

5. Dispositif de dosage (100) selon la revendication 4,
**caractérisé en ce qu'**un dispositif de réglage (120) permettant de régler le flux d'air comprimé à travers la conduite de dérivation (118) est disposé dans la conduite de dérivation (118).

6. Dispositif de dosage (100) selon l'une des revendications précédentes,
**caractérisé en ce que** la surface de la section transversale de la zone de remplissage (20) diminue au moins par endroits à partir de l'ouverture d'entrée (14) vers l'ouverture de sortie de matériau (16),
et/ou
la zone de remplissage (20) est formée, de préférence au moins par endroits, sous forme d'entonnoir.

7. Dispositif de dosage (100) selon l'une des revendications précédentes,
**caractérisé en ce que** l'une ou les plusieurs ouvertures de sortie d'air (18a, 18b) est/sont disposée(s) dans une paroi (22) délimitant la zone de remplissage (20) et de préférence périphérique.

8. Dispositif de dosage (100) selon la revendication 7,
**caractérisé en ce que** plusieurs ouvertures de sortie d'air (18a, 18b) sont disposées régulièrement sur la périphérie de la paroi (22) délimitant la zone de remplissage (20).

9. Dispositif de dosage (100) selon l'une des revendications précédentes,
**caractérisé en ce que** l'une ou les plusieurs ouvertures de sortie d'air (18a, 18b) est/sont formée(s) sous forme de fente ou sous forme d'ouvertures à fente.

10. Dispositif de dosage (100) selon l'une des revendications précédentes,
**caractérisé en ce qu'**un anneau matériel (24c) périphérique est disposé au-dessus des ouvertures de sortie d'air (18a, 18b), l'anneau matériel (24c) périphérique au-dessus des ouvertures de sortie d'air (18a, 18b) formant de préférence l'ouverture d'entrée (14).

11. Dispositif de dosage (100) selon l'une des revendications précédentes,
**caractérisé par** une âme (26) s'étendant vers l'extérieur à partir de la paroi (22) délimitant la zone de remplissage (20) et de préférence périphérique et/ou annulaire.

12. Dispositif de dosage (100) selon l'une des revendications précédentes,
**caractérisé en ce qu'**un anneau matériel (24a) périphérique est disposé sous les ouvertures de sortie d'air (18a, 18b), l'anneau matériel (24a) périphérique sous les ouvertures de sortie d'air (18a, 18b) étant de préférence disposé au-dessus de l'âme (26) s'étendant vers l'extérieur.

13. Dispositif de dosage (100) selon l'une des revendications précédentes,
**caractérisé en ce qu'**un anneau matériel (24b) périphérique est disposé entre un premier groupe d'ouvertures de sortie d'air (18a) et un second groupe d'ouvertures de sortie d'air (18b).

14. Dispositif de dosage (100) selon l'une des revendications précédentes,
**caractérisé en ce que** le dispositif de séparation (10) est formé par un corps de base (12), en particulier en matériau synthétique, en une seule pièce.

15. Appareil agricole permettant de distribuer du matériau granulaire sur une surface utile agricole, comportant
- un réservoir central permettant d'approvisionner le matériau granulaire,
- plusieurs dispositifs de dosage (100), qui peuvent être alimentés en matériau granulaire provenant du réservoir central, respectivement par l'intermédiaire d'un flux d'air chargé du matériau granulaire ; et
- plusieurs socs de semoir permettant de déposer des grains individualisés sur la surface utile agricole,
chaque dispositif de dosage (100) étant conçu pour mettre à disposition des grains provenant du matériau granulaire dans un flux de grains individualisés à au moins un soc de semoir ;
**caractérisé en ce que** les dispositifs de dosage (100) sont conçus selon l'une des revendications 1 à 14.
